# DEMANDE DE BREVET EUROPEEN

(11) **EP 0 534 827 A1**
(43) Date de publication de la demande: **31.03.1993**
(21) Numéro de dépôt: 92402571.1
(22) Date de dépôt: 18.09.1992
(51) Int. Cl.: H01B 1/12, C08L 65/00, C09D 165/00

(54) **Procédé d'obtention de matériaux conducteurs composites à base de polymère conducteur, à propriétés diélectriques contrôlées**

(30) Priorité: 27.09.1991 FR 9111911
(71) Demandeur: THOMSON-CSF, 75008 Paris (FR)
(72) Inventeur: Michel, Philippe, F-92045 Paris la Défense (FR); Vergnolle, Marie, F-92045 Paris la Défense (FR); Sagnes, Olivier, F-92045 Paris la Défense (FR)
(74) Mandataire: Guérin, Michel

(57) **Abrégé**

L'invention concerne un procédé d'obtention de film de matériau composite à base de particules de polymère conducteur, stabilisées par un surfactant fortement stérique ou fortement ionique. La stabilisation efficace des particules permet de contrôler l'évolution des propriétés diélectriques des films obtenus en fonction du taux d'entité conductrice conduisant à l'élaboration de films d'impédance variable.

Application : Revêtements répondant à des objectifs d'atténuation large bande électromagnétique.

## Description

Le domaine de l'invention est celui des matériaux composites à base de polymères conducteurs, utilisables pour des revêtements répondant à des objectifs d'atténuation large bande électromagnétique.

Pour atteindre de tels objectifs il est nécessaire de contrôler les propriétés diélectriques des matériaux employés de manière à superposer des couches de matériaux dont les propriétés confèrent à la structure résultante un gradient d'impédance.

Actuellement, les matériaux à base de polymère conducteur présentent des caractéristiques intéressantes pour l'absorption des ondes électromagnétiques, cependant le contrôle des propriétés conductrices avec le taux de polymère conducteur dans le matériau reste très incertain en raison de phénomène de percolation.

Plus précisément, ce phénomène physique correspondant au passage brutal des propriétés d'un corps A isolant à celles d'un corps B conducteur lors du mélange des populations A et B, dépend de divers paramètres, tels que la taille et la forme de la particule conductrice, la nature de la matrice liante isolante (sa compatibilité et son pouvoir mouillant). Ainsi, B. WESSLING a montré au congrès ANTEC 91 Montréal Canada que le phénomène de percolation se produisait entre 1 et 5 % en poids dans le cas de polyaniline dispersée dans une matrice de polychlorure de vinyle (PVC) ou de nylon faisant brutalement passer la conductivité d'environ 10 ⁻⁴S/cm à 1 S/cm. D'autres travaux de B. TIEKE (CIBA GEIGY, Polymer 1990, 31, 20) montrent que du polypyrrole électropolymérisé dans un polyimide présente un saut de percolation encore plus faible compris entre 0,2 et 0,5 % en masse. Avec de tels matériaux composites il n'est donc pas possible de contrôler la conductivité en fonction du taux de charges conductrices puisque l'on passe brutalement d'un état isolant à un état conducteur dont les propriétés mécaniques sont celles du polymère conducteur générant des matériaux cassants, difficiles d'emploi et ne bénéficiant pas des propriétés filmogènes de la matrice liante.

C'est pourquoi la présente invention propose un procédé d'obtention de matériaux composites à base de polymère conducteur permettant d'atténuer fortement le phénomène de percolation et assurant un passage progressif des propriétés isolantes aux propriétés conductrices en fonction du taux de charges conductrices. La gamme des concentrations dans laquelle s'opère se passage permet de disposer de matériaux exploitables car filmogènes et donc facilement déposables avec des propriétés diélectriques bien calibrées en vue de réaliser des couches de matériaux plus ou moins absorbantes. Pour cela le procédé selon l'invention utilise la chimie des polymères en milieu colloïdal pour synthétiser des particules de latex de polymère conducteur et des particules de latex de polymère filmogène isolant. Le mélange de ces deux latex présente l'avantage d'être effectué en milieu dispersé en uitilisant deux populations compatibles organiques de particules sphériques capables de s'agencer de manière favorable. Plus précisément le procédé selon l'invention comprend le codépot d'un latex de polymère conducteur et d'un latex de polymère filmogène isolant et est caractérisé en ce que les particules de latex du polymère conducteur sont stabilisées par un surfactant fortement stérique de type dérivés cellulosiques ou par un surfactant fortement ionique de type polymère comprenant des fonctions sulfonates. De préférence le polymère conducteur employé est le polypyrrole et le polymère filmogène isolant peut être un copolymère styrène-acrylate. Un bon stabilisateur des particules de latex de polyryrrole peut être la methylcellulose qui génère un fort encombrement stérique autour des particules. La concentration en poids de surfactant par rapport au monomère pyrrole peut être choisie voisine de 25 %. La stabilisation peut également être ionique et assurée par le polyvinylsulfonate. Dans ce cas il est nécessaire d'augmenter le pourcentage pondéral : surfactant/pyrrole qui peut être voisin de 300 %. L'avantage du polyvinylsulfonate réside dans sa facilité d'emploi, il est disponible en solution, ce qui évite tout problème de dissolution. Le latex isolant est de préférence réalisé à partir d'un polymère filmogène pouvant être un copolymère styrène-acrylate.

La présente invention sera mieux comprise et d'autres avantages apparaîtront à la lecture de la description qui va suivre donnée à titre non limitatif et des figures annexées parmi lesquelles :
- la figure 1 illustre l'évolution de la conductivité d'un matériau composite à base de polymère conducteur en fonction du pourcentage massique en polymère conducteur, selon l'art connu ;
- la figure 2 montre l'évolution de la permittivité diélectrique pour un film composite selon l'invention obtenu à partir de latex de polypyrrole stabilisé par la methylcellulose et de latex de copolymère styrène-acrylate de butyle, en fonction du taux de polymère conducteur dans le film ;
- la figure 3 illustre l'évolution de la permittivité en fonction du pourcentage de polymère conducteur dans un film composite obtenu à partir de latex de polypyrrole stabilisé par le polyvinylsulfonate et de latex de copolymère styrène acrylate de butyle.

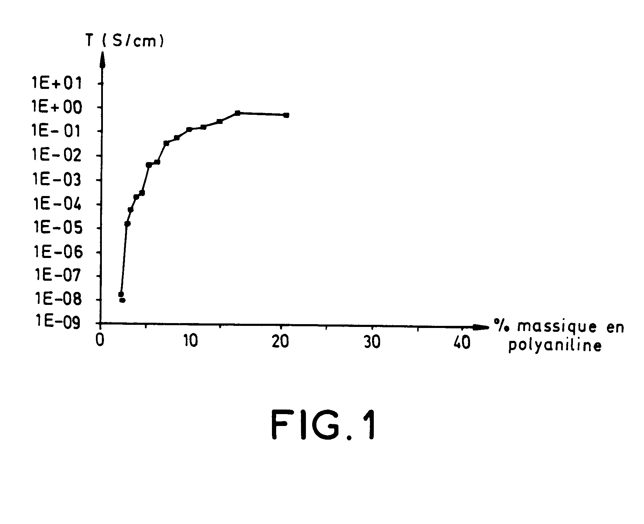

La présente invention propose de minimiser fortement l'effet de percolation obtenu classiquement avec des particules conductrices dispersées dans un composé isolant liant. La figure 1 illustre clairement le phénomène de percolation obtenu avec la polyaniline en tant que polymère conducteur dispersé dans un polymère isolant, au travers de l'évolution de la conductivité en fonction du pourcentage massique en polymère conducteur, selon l'art antérieur. Or la variation progressive de la conductivité avec la concentration en charge conductrice ne peut être obtenue qu'avec le contrôle de la dispersion de la charge et le contrôle des effets d'agglomérats et du contact entre particules. Ainsi lorsque l'on obtient urne dispersion homogène sans contact des particules entre elles on peut éviter un saut brutal de conductivité pour de faibles concentrations, significatif de la présence d'agglomérats conducteurs. En effet lorsque des particules conductrices sont suffisamment bien dispersées dans une matrice liante, la conductivité mesurée à fréquence nulle doit être pratiquement nulle, seule une conductivité en fréquence peut être détectée à condition que l'espace qui les sépare soit commensurable à la longueur d'onde incidente de mesure. Le saut de conductivité de la figure 1 prouve la présence d'agglomérats entre particules conductrices.

C'est pourquoi le procédé de l'invention propose d'entourer les particules conductrices d'une couronne permettant de les isoler entre elles. Plus précisément il s'agit de particules de polymère conducteur entourées d'une couronne de surfactant permettant de stabiliser les particules et d'empêcher ou de limiter les phénomènes d'agglomérat. Le procédé d'obtention du film de matériau conducteur comprend ainsi de préférence les étapes suivantes :

### 1) La synthèse du polymère conducteur sous forme de latex :

Pour obtenir le latex conducteur, on uitilise la chimie classique de polymères conducteurs que l'on stabilise en suspension par des agents surfactants choisis de manière à assurer une bonne stabilisation fortement stérique ou ionique. La synthèse du polymère conducteur est initiée par une réaction entre le monomère et un agent oxydant, en milieu aqueux. Lorsque la polymérisation s'est opérée, on centrifuge la suspension de particules conductrices à une vitesse supérieure à 1000 trs/min et ce durant plusieurs minutes. On élimine la partie surnageante et donc les ions en excès afin d'obtenir une suspension compatible avec le latex isolant. On redisperse dans l'eau distillée. Typiquement, la taille des particules de latex de polymère conducteur ont une taille de quelques centaines de nanomètres et sont très monodisperses.

### 2) La synthèse du polymère isolant filmogène :

On utilise une technique de polymérisation radicalaire en émulsion, après polymérisation le bain comportant des impuretés ioniques est lavé par une résine échangeuse d'ions qui se compose de grains susceptibles d'accrocher les impuretés, ainsi après filtration on récupère d'une part une partie solide avec impuretés et d'autre part le latex de polymère isolant propre. Les particules sont également bien monodisperses et présentent une taille de quelques centaines de nanomètres.

### 3) Mélange des deux latex :

La solution de latex de polymère conducteur est ajoutée à la solution de latex de polymère isolant filmogène, chaque solution étant faiblement concentrée (concentration molaire d'environ 5 à 10 %).

### 4) Séchage du mélange :

La solution est séchée en étuve à faible température (environ 40 °C), afin de limiter les phénomènes de convexion et le désordre dans le matériau. L'efficacité du surfactant permet de minimiser les effets de sédimentation des particules de polymère conducteur qui présente une densité élevée de l'ordre de 1,2 à 1,3 alors que les particules de latex isolant ont plutôt une densité voisine de 1.

On obtient ainsi un filin de matériau composite dont les propriétés électromagnétiques peuvent être contrôlées en fonction de la composition du film.

### Exemples de réalisation de films composites à partir de mélange de latex de polypyrrole et de latex de copolymère styrène-acrylate de butyle.

### Exemple 1 :

Le surfactant employé est la methylcellulose, Pour la synthèse du latex de polypyrrole on ajoute dans 700 ml d'eau, 5 g de methylcellulose, 10 g de pyrrole et 81 g de FeCl₃, 6H₂O (oxydant). L'ensemble est agité constamment à une vitesse de 500 trs/min durant 14 heures. Le latex obtenu est stable et présente un taux d'extrait sec d'environ 3 à 5 % après lavage par centrifugation.

Le latex isolant filmogène est obtenu par copolymérisation radicalaire en émulsion du styrène et de l'acrylate de butyle.

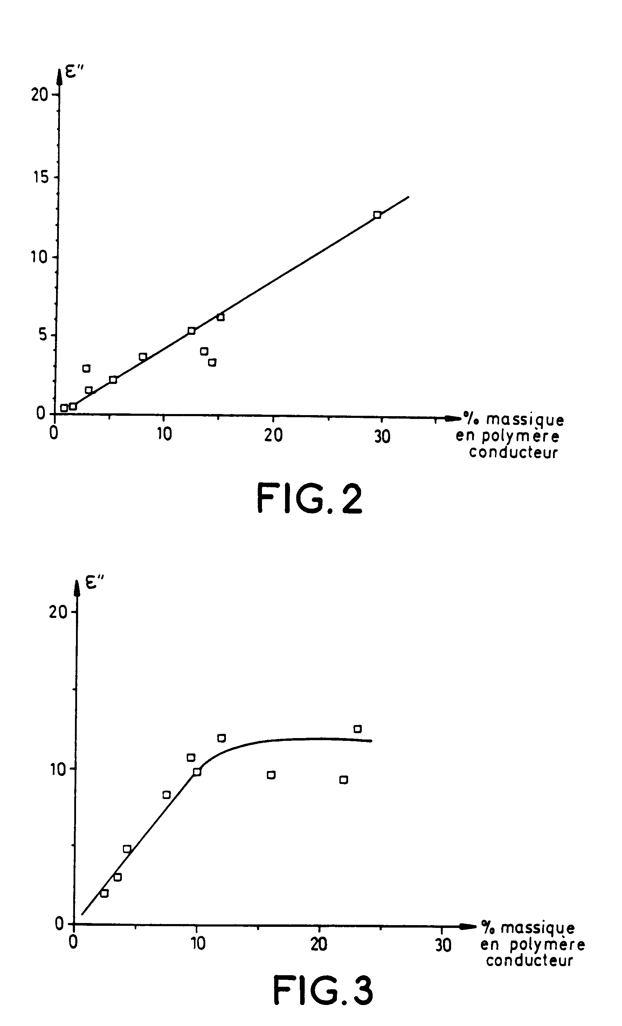

Le séchage est effectué durant environ 60 heures à 45°C. Les films obtenus à partir de taux variables en population conductrices ont été testés en analyse thermogravimétrique et analyse élémentaire afin de vérifier les taux de polymère conducteur et l'analyse diélectrique de ces films est représentée à la figure 2. Cette analyse a été effectuée à 9,5 GHz la permittivité ε ˝ étant reliée à la conductivité σ par la relation suivante : σ = ω εₒ ε ˝ où ω est la fréquence de mesure. La courbe de la figure 2 représentant l'évolution de la permittivité en fonction du taux de polymère conducteur dans le film composite témoigne du comportement linéaire des propriétés diélectriques en fonction du pourcentage l'entité conductrice. Le phénomène de percolation est ainsi maitrisé grâce à la couronne isolante de surfactants qui entoure les particules de polymère conducteur.

### Exemple 2 :

Le surfactant employé est le polyvinyl-sulfonate. La synthèse du latex polypyrrole est effectuée dans les conditions expérimentales suivantes :
On ajoute dans 900 ml d'eau, 10 g de pyrrole, 71 g de FeCl₃, 6H₂O et 251 g d'une solution concentrée à 25 % en poids de polyvinylsulfonate de sodium (soit environ 60 g de sel de polyvinylsulfonate de sodium). L'ensemble est agité constamment à une vitesse de 500 trs/min durant 15h30. Après lavage le latex de polymère conducteur est ajouté à un latex de polymère conducteur est ajouté à un latex de copolymère styrène-acrylate de butyle. Le séchage du mélange est effectué durant 60 heures à 45°C.

La figure 3 illustre le comportement de la permittivité diélectrique du film obtenu en fonction du taux de polymère conducteur dans le film composite. On obtient également une évolution linéaire montrant que le phénomène de percolation a été fortement minimisé grâce au choix d'un surfactant fortement ionique permettant de bien isoler les particules conductrices les unes des autres.

## Revendications

1. Procédé d'obtention d'un film de matériau conducteur composite comprenant le codépot d'un latex de polymère conducteur et d'un latex de polymère filmogène isolant caractérisé en ce que les particules de latex de polymère conducteur sont stabilisées par un surfactant fortement stérique de type dérivés cellulosiques ou par un surfactant fortement ionique de type polymère comportant des fonctions sulfonates, de manière à minimiser l'effet de percolation.

2. Procédé selon la revendication 1, caractérisé en ce que le polymère conducteur est le polypyrrole.

3. Procédé selon la revendication 2, caractérisé en ce que le surfactant est la methylcellulose.

4. Procédé selon la revendication 3, caractérisé en ce que le rapport pondéral entre la méthylcellulose et le monomère pyrrole est d'environ 25 %.

5. Procédé selon la revendication 2, caractérisé en ce que le surfactant est le polyvinylsulfonate.

6. Procédé selon la revendication 5, caractérisé en ce que le rapport pondéral entre le polyvinylsulfonate et le monomère pyrrole est d'environ 300 %.

7. Procédé selon l'une des revendications 1 à 6, caractérisé en ce que le polymère filmogène isolant est un copolymère styrène-acrylate.
